# EUROPEAN PATENT APPLICATION

(11) **EP 2 093 938 A1**
(43) Date of publication of application: **26.08.2009**
(21) Application number: 07828947.7
(22) Date of filing: 01.10.2007
(51) Int. Cl.: H04L 12/28, H04Q 7/36

(54) **COMMUNICATION SYSTEM, COMMUNICATION DEVICE AND COMMUNICATION METHOD, AND COMPUTER PROGRAM**

(30) Priority: 15.12.2006 JP 2006339236
(71) Applicant: Sony Corporation, Tokyo 108-0075 (JP)
(72) Inventor: IHORI, Akihiro, Tokyo 141-0001 (JP)
(74) Representative: Smith, Samuel Leonard
(86) International application number: PCT/JP2007/069207
(87) International publication number: WO 2008/072409

(57) **Abstract**

In a WUSB communication environment in which isochronous transfer cannot be used, priority communication is performed in units of devices. A WUSB host manages assigning of a band of reserved one or more MASs in a superframe by using a device information management table, in which device information entries each describing, in a bitmap format, a MAS for which a transaction can be executed are each provided for a WUSB device. The WUSB host assigns at least some of the reserved one or more MASs only to a particular WUSB device. Only a WUSB device marked in a corresponding device information entry serves as a target of transaction scheduling.

## Description

### Technical Field

The present invention relates to a communication system, a communication apparatus, a communication method, and a computer program in which communication is performed between a "host", such as a PC, and a "device", which is a peripheral device, such as a printer, via a USB interface. In particular, the present invention relates to a communication system, a communication apparatus, a communication method, and a computer program in which communication between a host and a device is performed using WUSB that adopts application of UWB (Ultra Wide Band), which is a wireless technology using an ultra-wide band, and adopts a multiband OFDM method promoted by Wimedia Alliance as standards for a physical layer and a MAC layer.

More specifically, the present invention relates to a communication system, a wireless communication apparatus, a wireless communication method, and a computer program in which isochronous transfer, which has priority over bulk transfer, is realized in WUSB. In particular, the present invention relates to a communication system, a wireless communication apparatus, a wireless communication method, and a computer program in which priority communication is performed in units of devices in a communication environment in which isochronous transfer cannot be used.

### Background Art

USB (Universal Serial Bus) is the standard for general-purpose bus interfaces that can be substituted for legacy ports, such as serial ports (RS-232C) or parallel ports, and that support plug-and-play. Originally, USB specifications were designed by four manufacturers including Intel Corporation, USA. However, at the present, USB Implementers Forum, Inc. (USB-IF), which is an NPO, performs establishment and management of the USB specifications.

In USB, specification groups called USB classes, which are grouped in accordance with functions of peripheral devices, are defined. Since devices manufactured in accordance with each class specification provide the same function, the devices that comply with the class specification can be operated by a corresponding class driver. Thus, it is not necessary to prepare different pieces of driver software for individual devices. USB has been widely adopted as a technology enabling communication between a "host", such as a PC, and a "device", which is a peripheral device, such as a printer.

In communications (transactions) using USB, basically, a configuration is employed in which a host-side performs scheduling, the host-side always starts communication, and a device responds to the communication. Also in a case where the device has data to be transmitted to the host, the device responds to a query from the host. In USB, both a host-side and a device-side are capable of having a plurality of logical communication channels (in USB, called "pipes") at the same time. The device is always connected to the host. Ends of the pipes are called endpoints.

USB supports a plurality of transfer modes so that USB can be used in various applications, and different transfer modes can be designated for individual pipes. A "control transfer" mode is used for setting and controlling a device. An "interrupt transfer" mode is used for transferring a small amount of data little by little from a keyboard or a mouse. A "bulk transfer" mode is used for intermittently and reliably transferring a relatively large amount of data from a storage device, a scanner, or the like. An "isochronous transfer" mode is used for transferring a large volume of data, such as video or audio data.

The priority relationship among these transfer modes is defined. For example, the isochronous transfer mode has priority over bulk transfer in order to ensure the data transfer amount per unit time (however, the upper limit of the bandwidth to be used for isochronous transfer of the entire bandwidth is defined in order not to completely stop bulk transfer). In addition, all the pipes used in the same transfer mode are equivalent.

Originally, USB was a transmission method using wired cables. USB 2.0, which realizes a High Speed mode (480 Mbps maximum) in which high-speed transfer can be achieved at a speed higher than IEEE 1394 (400 Mbps maximum) from the point of view of the standards, has been widely used. Recently, the development of "Wireless USB", which is an enhanced USB and is a blend of the security and communication speed of wired communications and the user-friendliness of wireless communications, has been conducted. For example, a mechanism for compensating for the rate of occurrence of relatively serious errors in wireless USB while taking into account many differences between wired USB and wireless USB has been suggested (for example, see Patent Document 1). In particular, wireless USB defined by USB-IF (described above) is referred to as "Certified Wireless Universal Serial Bus". Hereinafter, however, such wireless USB will be simply referred to as "WUSB".

WUSB adopts application of UWB (Ultra Wide Band), which is a wireless technology using an ultra-wide band, and adopts, as the standards for a physical layer and a MAC layer, a multiband OFDM method promoted by WiMedia Alliance (for example, see Non-Patent Document 1). Now, UWB uses an extremely wide frequency band of 3.1 GHz to 10.6 GHz. UWB is a communication method that achieves wireless transmission of a large volume of data, such as 100 Mbps, although only for short-distance communication. For example, in IEEE 802.15.3 or the like, a UWB communication method for performing access control by using a packet configuration including a preamble has been designed. Furthermore, OFDM (Orthogonal Frequency Division Multiplexing) is a modulation method for transmitting transmission data by distributing the transmission data to sub-carriers of frequencies that are orthogonal to each other within a symbol section. The bandwidth of each of the carriers is narrow. Thus, very high frequency-use efficiency can be achieved, and a strong tolerance to interference caused by frequency selective fading can be achieved. In the multiband OFDM method, a band from 3.1 GHz to 10.6 GHz is divided into a plurality of sub-bands each having a width of 528 MHz, and frequency hopping (FH) between the sub-bands is performed.

In WUSB, communication at a maximum speed of 480 Mbps can be achieved for a communication range of 3 meters and communication at a maximum speed of 110 Mbps can be achieved for a communication range of 10 meters. WUSB employs star topology. A single host handles at most 127 devices. WUSB also supports a so-called dual-role device. For example, a digital camera operates as a device when being connected to a computer and operates as a host when directly transmitting an image to a printer.

In WiMedia Alliance, which adopts application as the standard for a MAC layer of WUSB, a band is managed in accordance with a "Superframe", which serves as a unit of time. A superframe is further divided into 256 time slots (Media Access Slots (MASs)). A WUSB host reserves the number of MASs necessary for communication with a WUSB device that is being connected to the WUSB host (in other words, reservation of MASs is not performed by the WUSB device-side). Since the isochronous transfer mode has priority over the other transfer modes, transmission of a certain amount of data is ensured in accordance with the number of MASs reserved for a WUSB cluster. However, it is not necessary to strictly assign a particular MAS for a pipe. Implementation is done in such a manner that a transaction schedule can be changed flexibly to some extent in accordance with a communication status and the like.

In the MAC layer specification designed by the WiMedia, the use of multiband OFDM UWB by upper layers in Wireless 1394, WiNet, and the like, as well as WUSB, at the same time, is designed. Thus, a situation in which two or more UWB communication systems including different upper layers coexist within a range in which radio waves reach is assumed. In this case, adjustment is performed in the MAC layer.

A superframe is divided into 256 MASs and is managed. Each upper layer utilizing UWB reserves the number of MASs necessary for the MAC layer in accordance with a Distributed Reservation Protocol (DRP). Since each upper layer is capable of occupying the reserved MASs, interference between upper layers does not occur (for example, interference between WUSB and Wireless 1394 or WiNet does not occur).

In the case of WUSB, in order to calculate the number of necessary MASs, a WUSB host first estimates a bandwidth necessary for each WUSB device. For example, in interrupt transfer or isochronous transfer, a class driver of the WUSB device explicitly specifies a necessary bandwidth. Meanwhile, in bulk transfer or control transfer, a bandwidth is not explicitly specified. Thus, for example, it is necessary to perform control, such as dynamically increasing or decreasing, in accordance with the length of a queue, the bandwidth to be assigned (however, since this control algorithm is not within the scope of the present invention, the detailed description thereof is omitted in this description). After determining the number of MASs necessary for each WUSB device, the WUSB host actually reserves the MASs in accordance with the DRP.

In the MAC layer in which multiband OFDM USB is used at the same time, management of the use status of each of a plurality of MASs within a superframe is performed using a MAS management table (MAS Availability Information). In addition, in WUSB, management of the MAS use status of each WUSB device is performed using a device information management table. In the device information management table, device information entries each including Device Availability Information having a bit mask of 256 bits for a corresponding WUSB device connected to the WUSB host are provided (for example, see Non-Patent Document 2).

A procedure in which a WUSB host performs communication management by using a MAS management table and a device information management table in a WUSB cluster is basically as described below.

(1) At the initialization of a WUSB device, the WUSB host adds an entry for the WUSB device into the device information management table.
(2) An application or a class driver using the WUSB device specifies a bandwidth necessary for communication. If a bandwidth is not specified, the WUSB host estimates a necessary bandwidth by referring to the length of a queue holding a transaction to be processed and the like. In a case where a plurality of endpoints are used at the same time, the total sum of the specified or estimated bandwidths is obtained. The WUSB host registers the total bandwidth into the entry in the device information management table.
(3) The WUSB host registers the present speed (physical layer rate) of communication with the WUSB device into the corresponding entry in the device information management table.
(4) In accordance with the physical layer rate and the necessary bandwidth of the WUSB device, the WUSB host calculates the total number of necessary MASs.
(5) The WUSB host refers to the MAS management table, and obtains the number of reserved MASs.
(6) The WUSB host compares the number of necessary MASs with the number of reserved MASs. If the number of MASs is short, the WUSB host reserves a non-reserved MAS in accordance with the DRP. Meanwhile, if an unwanted MAS exists, the WUSB host cancels the unwanted MAS. The result of such reservation or cancellation is reflected in the MAS management table.
(7) The WUSB host copies the positions of the reserved MASs for WUSB into the entry in the device information management table.
(8) If a new device is connected, the WUSB host returns to (1).
(9) If a device is disconnected, the WUSB host deletes the entry for the corresponding device from the device information management table. Then, the WUSB host returns to (2).
(10) In parallel to distributing transactions, which are generated by an application, to queues, the WUSB host regularly repeats the processing of (2) and the subsequent processing.

An example of the configuration of the device information management table used in the above-described procedure for communication management will be shown.

**[Table 1]**

| DEVICE | NECESSARY BANDWIDTH | PHY RATE | Device Availability Info |
|---|---|---|---|
| A | 1Mbps | 50Mbps | 000011110000000011111110000··· ··· ···000 |
| B | 2Mbps | 100Mbps | 000011110000000011111110000··· ··· ···000 |
| C | 10Mbps | 200Mbps | 000011110000000011111110000··· ··· ···000 |
| D | 4Mbps | 100Mbps | 000011110000000011111110000··· ··· ···000 |

Device Availability Info includes a field which has a length of 256 bits, where a MAS that can be executed by a WUSB device is represented in a bitmap format. That is, for a MAS corresponding to the position of a bit indicating "1" in the Device Availability Info field, a corresponding device serves as a target of transaction scheduling.

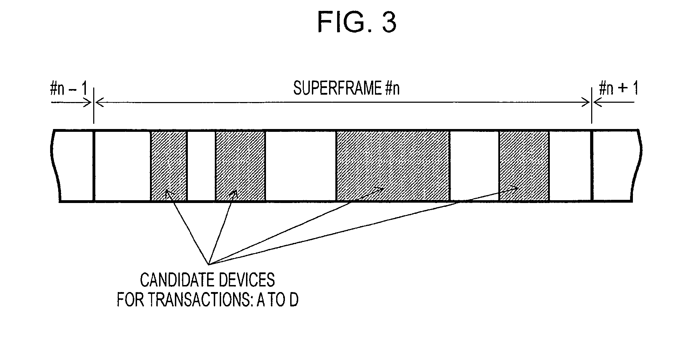

In normal WUSB, one or more MASs reserved in accordance with the DRP are copied to each entry in the device information management table (for example, see Non-Patent Document 2). Thus, Device Availability Info of all the devices has an identical value. This means that one or more MASs reserved in accordance with the DRP are to be equally used by all the WUSB devices (or individual pipes). Fig. 3 schematically shows the use statuses of MASs in a superframe for WUSB. The use statuses of the MASs are represented by the Device Availability Info shown in Table 1. In this figure, in bands represented by oblique lines, all the WUSB devices A to D within a WUSB cluster serve as transaction candidates.

Obviously, in the WUSB specification, the priority relationship between transfer modes is defined (as described above). Thus, a bandwidth reserved by a WUSB host is not necessarily equally assigned to the individual WUSB devices. However, unlike USB 2.0, which uses a wired cable, in WUSB, the communication speed in the physical layer varies due to the instability of a transmission channel relating to a communication distance, a communication status, or the like. Thus, the amount of data that can be transmitted during the same period of time continuously varies. Therefore, in order to ensure the amount of data to be transmitted in the isochronous transfer mode, complicated control, such as making a reservation of another MAS or ensuring the stability of a transmission channel by using Link Adaptation, is necessary.

In addition, in the case of executing a transaction for a MAS, an algorithm for determining a transaction schedule is equally applied to individual devices serving as candidates (that is, communications using individual pipes are equally handled). Thus, under the totally identical conditions (relating to the transfer rate of a physical layer, a transfer mode, a desired bandwidth, and the like), equal services can be provided to the individual WUSB devices.

Due to such factors, there is a problem in that it is difficult to reliably ensure a bandwidth in the isochronous transfer mode. In addition, complicated control is necessary for implementing the isochronous transfer mode as hardware, thereby increasing the circuit scale and increasing the time necessary for inspection of a product. Thus, initial WUSB products might not support isochronous transfer. Even the subsequent WUSB products might not support isochronous transfer, from the point of view of cost reduction. In such a case, a mechanism for causing a device to perform communication using a bandwidth more preferentially than other devices is not available.

Patent Document 1: Japanese Unexamined Patent Application Publication No. 2006-216015
Non-Patent Document 1: Wireless Universal Serial Bus Specification (May 12, 2005, Revision 1.0)
Non-Patent Document 2: Wireless Host Controller Interface (WHCI) Specification for Certified Wireless Universal Serial Bus (June 16, 2006, Revision 0.95)

### Disclosure of Invention

### Technical Problem

An object of the present invention is to provide an excellent communication system, an excellent communication apparatus, an excellent communication method, and an excellent computer program in which communication can be suitably performed between a host and a device by using WUSB that adopts application of UWB, which is a wireless technology using an ultra-wide band, and adopts a multiband OFDM method promoted by Wimedia Alliance as standards for a physical layer and a MAC layer.

Another object of the present invention is to provide an excellent communication system, an excellent communication apparatus, an excellent communication method, and an excellent computer program in which priority communication can be suitably performed in units of devices in a WUSB communication environment in which isochronous transfer cannot be used.

### Technical Solution

The present invention has been made taking into account the above-described problems. According to a first aspect of the present invention, a communication system in which a band is reserved in units of predetermined time slots for each superframe and in which within a cluster including a plurality of devices, one or more time slots reserved for the cluster are shared between the plurality of devices, is characterized by including time-slot reservation means for reserving the one or more time slots within the superframe for the cluster; and time-slot assigning means for assigning the reserved one or more time slots to the plurality of devices within the cluster in such a manner that different transaction opportunities are provided to the plurality of devices.

However, "system" used here represents a logical collection of a plurality of apparatuses (or functional modules implementing particular functions). It is not particularly relevant whether or not individual apparatuses or individual functional modules are provided in a single casing (the same applies to the description below).

USB, which is widely used as the general-purpose bus interface standard, supports a plurality of transfer modes for which the priority relationship is defined, and different transfer modes can be designated for individual pipes. In addition, recently, the development of expanded wireless USB using a UWB wireless technology has been conducted. WUSB, which is designed and managed by USB-IF, is a typical wireless USB.

Normally, in WUSB, communications using pipes in the same transfer mode are equally handled. For example, data can be transmitted at the same speed in bulk transfer to a WUSB device A and in bulk transfer to a WUSB device B. This is realized when a WUSB host collectively obtains MASs and equally performs scheduling of communications with pipes. Normally, a round-robin method or the like is used for scheduling.

Meanwhile, in WUSB, the error rate and transfer speed of communication continuously vary due to a variation in a communication status. Thus, in order to reliably ensure a bandwidth required by a pipe using the isochronous transfer mode, a problem in which complicated processing is necessary occurs.

In contrast, in the communication system according to the present invention, a WUSB host reserves one or more MASs to be used by the WUSB cluster in a superframe, which is used at the same time by a plurality of network upper layers adopting a physical layer and a MAC layer designed by WiMedia Alliance. The WUSB host also assigns the reserved one or more MASs to a plurality of devices in the cluster in such a manner that different transaction opportunities are provided to the plurality of devices.

More specifically, the WUSB host performs assigning of a band of the reserved one or more MASs in the superframe by using a device information management table, in which device information entries (Device Availability Info) each describing, in a bitmap format, a MAS for which a transaction can be executed are each provided for a WUSB device in the WUSB cluster. The WUSB host assigns at least some of the reserved one or more MASs only to a particular WUSB device. In other words, the details of the MASs reserved for the WUSB cluster are not copied to the device information entries each provided for a corresponding WUSB device. All the MASs reserved for the WUSB cluster are not shared among all the WUSB devices.

Each of the WUSB devices serves as a target of transaction scheduling for a MAS marked in the corresponding device information entry for the WUSB device. That is, when one of the one or more time slots in the superframe reserved for the WUSB cluster is reached, the device information management table is referred to, and transaction scheduling for starting execution of a transaction for a WUSB device for which information indicating that the device is capable of executing the transaction is described in a corresponding device information entry is performed.

Consequently, in the communication system according to the present invention, by adopting a configuration in which the details of a device information entry in the device information management table are changed for each WUSB device, different transaction opportunities can be provided to a plurality of devices in a WUSB cluster.

Now, the WUSB host receives a request for a transaction from an application or a class driver using each WUSB device. The WUSB host determines the number of time slots necessary for the WUSB cluster in accordance with the total bandwidth necessary for transactions for the individual WUSB devices in the WUSB cluster and reserves the time slots in the superframe.

The WUSB host performs registration of device information entries for the individual WUSB devices in accordance with the number of time slots necessary for the transactions for the individual WUSB devices in the WUSB cluster. For example, if the number of necessary time slots is different for each WUSB device, as in a case where some of pipes use the isochronous transfer mode, the WUSB cluster assigns at least some of the reserved MASs only to a particular WUSB device. Accordingly, different transaction opportunities can be provided to the WUSB devices.

Furthermore, according to a second aspect of the present invention, a computer program described in a computer-readable format in such a manner that processing for reserving a band within a cluster including a plurality of devices is executed by a computer in a communication environment in which a plurality of network upper layers use a superframe at the same time, is characterized by causing the computer to execute the processing including a time-slot reservation step of reserving one or more time slots within the superframe for the cluster and a time-slot assigning step of assigning the reserved one or more time slots to the plurality of devices within the cluster in such a manner that different transaction opportunities are provided to the plurality of devices.

The computer program according to the second aspect of the present invention defines a computer program that is described in a computer-readable format in such a manner that predetermined processing is performed by a computer. In other words, when the computer program according to the second aspect of the present invention is installed into the computer, a cooperative function is implemented on the computer and the computer is capable of operating as a host generalizing the operations within a cluster in the communication system according to the first aspect of the present invention.

### Advantageous Effects

In a communication system according to the present invention, a scheduling mechanism of a WUSB host is set in such a manner that only a particular WUSB device is capable of using some of the MASs obtained by the WUSB host. Thus, a pipe belonging to the particular WUSB device can be preferentially implemented. Consequently, according to the present invention, an excellent communication system, an excellent communication apparatus, an excellent communication method, and an excellent computer program in which priority communication can be performed in units of devices in a WUSB communication environment in which isochronous transfer cannot be used can be provided.

Other objects, features, and advantages of the present invention will become apparent from the more detailed description based on embodiments of the present invention described below and the attached drawings.

### Brief Description of Drawings

[Fig. 1] Fig. 1 is an illustration showing a functional block diagram for performing communication management by using a MAS management table and a device information management table in a WUSB communication system.
[Fig. 2] Fig. 2 is an illustration schematically showing the use statuses of MASs in a superframe for WUSB, the use statuses of the MASs being represented by Device Availability Info shown in Table 3.
[Fig. 3] Fig. 3 is an illustration schematically showing the use statuses of MASs in a superframe for WUSB, the use statuses of the MASs being represented by Device Availability Info shown in Table 1.

### Best Modes for Carrying Out the Invention

Hereinafter, embodiments of the present invention will be explained in detail with reference to the drawings.

The present invention relates to a WUSB communication system utilizing multiband OFDM UWB. WUSB adopts a physical layer and a MAC layer designed by WiMedia Alliance and is capable of using other upper layers in Wireless 1394, WiNet, and the like at the same time. In WiMedia Alliance, a network is operated for each superframe having a predetermined period of time. Each superframe is further divided into 256 MASs, and upper layers reserve MASs to be used for themselves. A WUSB host reserves the number of necessary MASs and performs transaction scheduling for each WUSB device within a WUSB cluster.

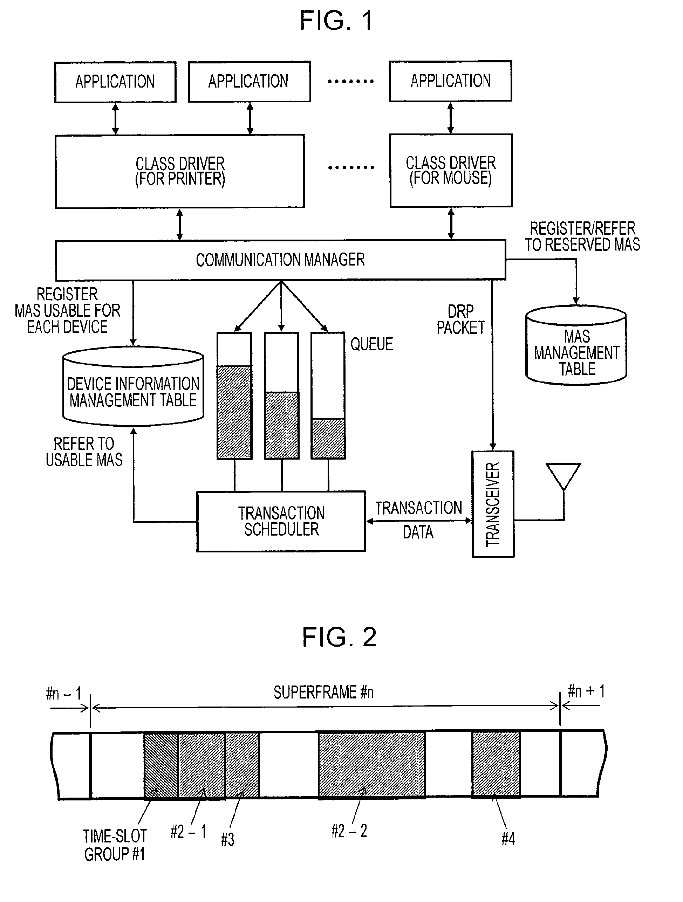

Fig. 1 shows a functional block diagram for performing communication management by using a MAS management table and a device information management table in a WUSB communication system. Individual functional blocks shown in this figure are implemented in, for example, a WUSB host that generalizes a certain WUSB cluster.

A class driver is software for implementing a function unique to each device (for example, in the case of a printer, a function of feeding and printing data). For example, an application, such as a spreadsheet application, calls a class driver for a printer to perform printing or calls a class driver for mass storage to perform reading and writing of a file. An upper layer, such as a class driver or an application, requires a transaction for performing communication with a WUSB device.

A MAS management table is a table in which reservation statuses of MASs in a superframe for a plurality of network upper layers in WUSB, wireless 1394, WiNet, and the like using multiband OFDM UWB at the same time are described. The MAS management table is managed in the MAC layer. In the case of WUSB, a host centrally makes reservations for MASs in the MAS management table. Table 2 shows an example of the configuration of the MAS management table.

**[Table 2]**

| UPPER LAYER | RESERVATION STATUS OF MAS |
|---|---|
| WUSB | 000011110000000011111110000··· ··· ···000 |
| OTHER | 110000001110000000000000000··· ··· ···000 |

In the example shown in the above table, in the MAS management table, entries are each provided for an upper layer requiring a band in a superframe. In each of the entries, the reservation statuses of MASs are managed by using a bitmap having a length of 256 bits corresponding to the individual MASs in the superframe. In an entry corresponding to WUSB, a bit representing "1" is provided at the position of a MAS reserved for the WUSB cluster. In contrast, if another upper layer reserves a MAS in accordance with a DRP, the position of a corresponding bit in the "other" upper layer entry is marked. In addition, if another WUSB cluster (another WUSB host and WUSB devices connected to the WUSB host) reserves a MAS, the position of a corresponding bit in the "other" upper layer entry is marked. In the MAS management table, reservation of a MAS is performed in an exclusive manner, and the same bit position is not marked in two or more entries.

The device information management table complies with the WHCI specification (for example, see Non-Patent Document 2) or the HWA specification (for example, see 8.5.3.7 of Non-Patent Document 1) and represents in a bitmap format, by using Device Availability Info having a length of 256 bits and provided for each WUSB device in a WUSB cluster, a MAS for which the WUSB device can execute a transaction. That is, each WUSB device serves as a target of transaction scheduling in a MAS corresponding to the position of a bit representing "1" in a Device Availability Info field of the WUSB device (as described above). In this embodiment, it is assumed that the device information management table has a configuration similar to that shown in Table 1, and an entry is provided for each WUSB device connected to a WUSB host. In each entry, a Device Availability Info field indicating the position of a MAS that can be used by the corresponding WUSB device and other types of information (an encryption key, an address, and the like) are recorded.

A communication manager queues transaction requests from upper layers. In addition, the communication manager performs control, such as analysis of a transaction request from an upper layer, calculation of the number of MASs necessary for communication with a WUSB device, and registration of reserved MASs by referring to a MAS management table. The reserved MASs are assigned to each WUSB device and are registered into the above-mentioned device information management table. In normal WUSB, the same MAS information (that is, all the MASs reserved for a WUSB cluster) is registered in all the entries of a device information management table (as described above).

A transaction scheduler performs, for each superframe, management of scheduling of a transaction for each WUSB device. More specifically, when a MAS in a superframe reserved by a WUSB host is reached, one of a plurality of devices for which transaction requests exist in a queue is selected, and a corresponding transaction is executed. Here, the device information management table is referred to, and a WUSB device that is not capable of using the MAS (that is, a device for which "1" is not described in the position of a bit corresponding to the MAS and thus which does not serve as a target of transaction scheduling) is excluded. In addition, in a case where a plurality of WUSB devices that are capable of using the MAS (that is, a plurality of devices for which "1" is described in the position of the bit corresponding to the MAS) exist, one of the plurality of WUSB devices is selected in accordance with a predetermined algorithm and the corresponding transaction is executed. For example, the specification for a WUSB controller chip, such as a WHCI (for example, see Non-Patent Document 2), defines that a round-robin method is used for bulk transfer.

In normal WUSB, a WUSB host directly copies the details of MASs reserved in a MAS management table to Device Availability Info of all the entries in a device information management table. In this case, a bitmap representing MASs assigned for a WUSB cluster in the MAS management table is identical to a bitmap of Device Availability Info of each device in the WUSB cluster in the device information management table. Thus, equal transaction opportunities are provided to all the devices in the WUSB cluster.

Meanwhile, in this embodiment, the communication manager does not cause MASs reserved in the MAS management table to be shared among all the WUSB devices. At least some of the reserved MASs are assigned only to a particular WUSB device (more specifically, a device using higher priority communication). That is, the communication manager does not simply copy the details of MASs reserved in the MAS management table to Device Availability Info of all the entries in the device information management table. The details of Device Availability Info are changed for each device.

For example, the communication manager performs processing for registering one-fifth of the MASs reserved in the MAS management table into only Device Availability Info of a device A, registering another one-fifth of the MASs reserved in the MAS management table into Device Availability Info of a device B, and registering the remaining MASs into Device Availability Info of all the other devices in the WUSB cluster. By setting the device information management table as described above, some of the MASs are not shared among all the WUSB devices in the WUSB cluster. Thus, only a particular WUSB device is construed as being capable of executing a transaction. When selecting a communication device for the some of the MASs, the transaction scheduler inevitably selects the particular WUSB device.

In Table 3 below, an example of the configuration of the device information management table in a case where the details of Device Availability Info are changed for each device is shown.

**[Table 3]**

| DEVICE | NECESSARY BANDWIDTH | PHY RATE | Device Availability Info |
|---|---|---|---|
| A | 1Mbps | 50Mbps | 111111110000000011111110000··· ··· ···000 |
| B | 2Mbps | 100Mbps | 000011110000000011111111110··· ··· ···000 |
| C | 1Mbps | 200Mbps | 000011111111000011111110000··· ··· ···000 |
| D | 4Mbps | 100Mbps | 000011110000000011111111110··· ··· ···000 |

Each WUSB device serves as a target of transaction scheduling for a MAS that is marked in a Device Availability Info field of the WUSB device (as described above). Thus, in some MASs, only a particular device serves as a target of transaction scheduling. In the example shown in Table 3, in MASs marked only for a device A, only the device A serves as a target of transaction scheduling. In MASs marked only for a device C, only the device C serves as a target of transaction scheduling. In MASs marked for devices B and D, both the devices B and D serve as targets of transaction scheduling.

Fig. 2 schematically shows the use statuses of MASs in a superframe for WUSB. The use statuses of the MASs are represented by the Device Availability Info shown in Table 3. In the example shown in this figure, in a time-slot group #1, only the device A serves as a transaction candidate. In time-slot groups #2-1 and #2-2, each of the devices A to D serves as a transaction candidate. In a time-slot group #3, only the device C serves as a transaction candidate. In a time-slot group #4, the devices B and D serve as transaction candidates.

As shown in Table 3, a configuration in which, in the device information management table, the details of Device Availability Info are changed for each device is adopted. Thus, it should be fully understood that different transaction opportunities can be provided to a plurality of devices in a WUSB cluster.

However, the device information management table describes transaction schedules in a WUSB cluster. There is no change in the MAS management table, which manages the reservation statuses of MASs between WUSB and other upper layers. That is, a bitmap obtained by ORing Device Availability Info of individual entries in the device information management table must be equal to the details of the entry for the WUSB cluster in the MAS management table. Table 4 shows the details of a MAS management table corresponding to the device information management table shown in Fig. 2.

**[Table 4]**

| UPPER LAYER | RESERVATION STATUS OF MAS |
|---|---|
| WUSB | 111111111111000011111110000··· ··· ···000 |
| OTHER | 000000000000011000000000011··· ··· ···000 |

A procedure for performing communication management by using a MAS management table and a device information management table while changing the details of Device Availability Info for each device in a WUSB cluster is as described below.

(1) At the initialization of a WUSB device, the communication manager adds an entry for the WUSB device into the device information management table.

(2) An application or a class driver using the WUSB device specifies a bandwidth necessary for communication. If a bandwidth is not specified, the communication manager estimates a necessary bandwidth by referring to the length of a queue holding a transaction to be processed and the like. In a case where a plurality of endpoints are used at the same time, the total sum of the specified or estimated bandwidths is obtained. The communication manager registers the total bandwidth into the entry in the device information management table.

(3) The communication manager registers the present speed (physical layer rate) of communication with the WUSB device into the corresponding entry in the device information management table.

(4) In accordance with the physical layer rate and the necessary bandwidth of the WUSB device, the communication manager calculates the number of MASs necessary for the device. At the same time, the communication manager also calculates the total number of necessary MASs.

(5) The communication manager refers to the MAS management table, and obtains the number of reserved MASs.

(6) The communication manager compares the number of necessary MASs with the number of reserved MASs. If the number of MASs is short, the communication manager reserves a non-reserved MAS in accordance with the DRP. Meanwhile, if an unwanted MAS exists, the communication manager cancels the unwanted MAS. The result of such reservation or cancellation is reflected in the MAS management table.

(7) The communication manager sets the position of a MAS that can be used by the device in Device Availability Info of the entry in the device information management table. If there is a particular device that is to start a transaction preferentially, one or more MASs that can be used only by the particular device are prepared in accordance with the number of MASs necessary for the particular device.

(8) If a new device is connected, the communication manager returns to (1).

(9) If a device is disconnected, the communication manager deletes the entry for the corresponding device from the device information management table. Then, the communication manager returns to (2).

(10) In parallel to distributing transactions, which are generated by an application, to queues, the communication manager regularly repeats the processing of (2) and the subsequent processing.

Note that in procedure (7) mentioned above, an algorithm for assigning, by a WUSB host, each MAS reserved in the MAS management table to a corresponding device in the WUSB cluster is not particularly limited.

For example, a class driver notifies the communication manager of a bandwidth necessary for requiring a transaction, and the communication manager calculates the number of MASs necessary for transmission of the bandwidth and sets Device Availability Info. The position of a MAS to be marked may be selected at random. In this case, independent of communication of a transaction request, a necessary bandwidth may be reported. Alternatively, a method in which a bandwidth that is originally associated with a transaction request in the isochronous transfer mode is used may be employed. In the latter case, a state in which bulk transfer is actually used although it appears to the class driver as if the isochronous transfer mode was used, can be implemented.

In addition, in a case where a plurality of devices capable of using a MAS exist, any method can be used for determining which device should execute a transaction preferentially. For example, a device that executes a transaction preferentially can be determined in accordance with any one of the methods described below.

Method 1: An application or a class driver transmits to the communication manager a message indicating that "priority communication is requested".
Method 2: The administrator of a WUSB host sets, by using a management tool, information indicating which device should have priority in the communication manager.
Method 3: A predetermined algorithm is incorporated in the communication manager. For example, an algorithm for providing a priority communication system to a device having a queue length of a predetermined value or more is adopted. Industrial Applicability

The present invention has been explained above in detail with reference to particular embodiments. However, it is obvious that those skilled in the art can make modifications or substitutions to the foregoing embodiments without departing from the gist of the present invention.

In this description, embodiments applied to WUSB have been mainly explained. However, the gist of the present invention should not be limited to the foregoing embodiments. The present invention can also be applied, in a similar manner, to various communication systems in which a band is reserved in units of time slots for each predetermined time and in which a reserved time slot is shared between devices within a cluster (or a network). Furthermore, the application area should not be limited to wireless communication and should include various communication techniques.

In short, the present invention has been disclosed by way of exemplary embodiments, and the description should not be construed in a limited manner. The gist of the present invention should be determined with reference to the claims.

## Claims

1. A communication system in which a band is reserved in units of predetermined time slots for each superframe and in which, within a cluster including a plurality of devices, one or more time slots reserved for the cluster are shared between the plurality of devices, the communication system being **characterized by** comprising:
time-slot reservation means for reserving the one or more time slots within the superframe for the cluster; and
time-slot assigning means for assigning the reserved one or more time slots to the plurality of devices within the cluster in such a manner that different transaction opportunities are provided to the plurality of devices.

2. The communication system according to Claim 1,
**characterized in that**:
a multiband OFDM (Orthogonal Frequency Division Multiplexing) UWB (Ultra Wide Band) method, which is a wireless technology using an ultra-wide band, is used, and the superframe is used at the same time by a plurality of network upper layers adopting a physical layer and a MAC layer, which are designed by WiMedia Alliance; and
the cluster includes a host and one or more devices defined in accordance with WUSB (Certified Wireless Universal Serial Bus) defined by USB-IF (USB Implementers Forum, Inc.).

3. The communication system according to Claim 1,
**characterized in that**:
the time-slot assigning means includes
a device information management table in which a device information entry describing, in a bitmap format, a time slot for which a transaction can be executed in the superframe is provided for each of the plurality of devices within the cluster,
time-slot registration means for registering a time slot that can be used by each of the plurality of devices into a corresponding device information entry in the device information management table, and
transaction scheduling means for, when one of the one or more time slots in the superframe that is reserved for the cluster is reached, referring to the device information management table and starting execution of a transaction for a device for which information indicating that the device is capable of executing the transaction is described in a corresponding device information entry; and
the time-slot registration means provides different transaction opportunities to the plurality of devices by assigning at least some of the one or more time slots reserved for the cluster only to a particular device.

4. The communication system according to Claim 1, **characterized in that** the time-slot reservation means reserves the one or more time slots in the superframe by determining the number of time slots necessary for the cluster in accordance with the total bandwidth necessary for transactions for the individual devices within the cluster.

5. The communication system according to Claim 3 **characterized in that** the time-slot registration means performs registration of device information entries for the individual devices in accordance with the number of time slots necessary for transactions for the individual devices within the cluster.

6. A communication apparatus reserving a band within a cluster including a plurality of devices in a communication environment in which a plurality of network upper layers use a superframe at the same time, the communication apparatus being **characterized by** comprising:
time-slot reservation means for reserving one or more time slots within the superframe for the cluster; and
time-slot assigning means for assigning the reserved one or more time slots to the plurality of devices within the cluster in such a manner that different transaction opportunities are provided to the plurality of devices.

7. The communication apparatus according to Claim 6,
**characterized in that**:
in the communication environment, a multiband OFDM UWB method, which is a wireless technology using an ultra-wide band, is used, and a physical layer and a MAC layer, which are designed by WiMedia Alliance, are adopted; and
the communication apparatus operates as a host within a WUSB cluster, which is defined by USB-IF.

8. The communication apparatus according to Claim 6,
**characterized in that**:
the time-slot assigning means includes
a device information management table in which a device information entry describing, in a bitmap format, a time slot for which a transaction can be executed in the superframe is provided for each of the plurality of devices within the cluster,
time-slot registration means for registering a time slot that can be used by each of the plurality of devices into a corresponding device information entry in the device information management table, and
transaction scheduling means for, when one of the one or more time slots in the superframe that is reserved for the cluster is reached, referring to the device information management table and starting execution of a transaction for a device for which information indicating that the device is capable of executing the transaction is described in a corresponding device information entry; and
the time-slot registration means provides different transaction opportunities to the plurality of devices by assigning at least some of the one or more time slots reserved for the cluster only to a particular device.

9. The communication apparatus according to Claim 6, **characterized in that** the time-slot reservation means reserves the one or more time slots in the superframe by determining the number of time slots necessary for the cluster in accordance with the total bandwidth necessary for transactions for the individual devices within the cluster.

10. The communication apparatus according to Claim 8, **characterized in that** the time-slot registration means performs registration of device information entries for the individual devices in accordance with the number of time slots necessary for transactions for the individual devices within the cluster.

11. A communication method for reserving a band within a cluster including a plurality of devices in a communication environment in which a plurality of network upper layers use a superframe at the same time, the communication method being **characterized by** comprising:
a time-slot reservation step of reserving one or more time slots within the superframe for the cluster; and
a time-slot assigning step of assigning the reserved one or more time slots to the plurality of devices within the cluster in such a manner that different transaction opportunities are provided to the plurality of devices.

12. A computer program described in a computer-readable format in such a manner that processing for reserving a band within a cluster including a plurality of devices is executed by a computer in a communication environment in which a plurality of network upper layers use a superframe at the same time, the computer program being **characterized by** causing the computer to execute the processing comprising:
a time-slot reservation step of reserving one or more time slots within the superframe for the cluster; and
a time-slot assigning step of assigning the reserved one or more time slots to the plurality of devices within the cluster in such a manner that different transaction opportunities are provided to the plurality of devices.
